# FASCICULE DE BREVET EUROPEEN

(11) **EP 3 707 983 B1**
(45) Date de publication et mention de la délivrance du brevet: **09.10.2024**
(21) Numéro de dépôt: 20162512.6
(22) Date de dépôt: 11.03.2020
(51) Int. Cl.: A01B 73/04, A01D 75/00, A01B 63/24, A01D 75/30, A01B 63/32

(54) **MACHINE AGRICOLE ÉQUIPÉE D'UN TIRANT DE RÉPARTITION**
LANDWIRTSCHAFTLICHE MASCHINE MIT EINER VERTEILENDEN ZUGSTANGE
AGRICULTURAL MACHINE EQUIPPED WITH A DISTRIBUTION TIE-ROD

(30) Priorité: 13.03.2019 FR 1902566
(43) Date de publication de la demande: 16.09.2020
(73) Titulaire: Kuhn SAS, 67700 Saverne (FR)
(72) Inventeur: HUSSON, Geoffroy, 67700 Ottersthal (FR)
(74) Mandataire: Hager, Esther Evelyne

(56) Documents cités:
- CA-A1- 2 252 293
- CA-C- 2 252 293
- FR-A1- 2 085 920
- US-A- 4 790 389
- US-B1- 8 505 645

## Description

La présente invention se rapporte au domaine technique général du machinisme agricole. Elle se rapporte plus particulièrement à une machine agricole destinée à être attelée à un tracteur et comportant deux unités latérales et un cadre qui s'étend dans une direction longitudinale, chaque unité latérale comportant un bras monté pivotant par rapport au cadre autour d'un axe de pliage respectif orienté sensiblement parallèlement à la direction longitudinale, chaque unité latérale comportant un groupe d'outils relié au cadre par l'intermédiaire du bras respectif et pouvant occuper une position de travail dans laquelle il prend appui sur le sol, chaque unité latérale comportant un moyen de liaison qui est configuré pour autoriser au groupe d'outils respectif à se déplacer par rapport au bras respectif et qui comporte au moins un actionneur d'allégement permettant d'exercer sur chaque groupe d'outils en position de travail un effort dirigé vers le haut, la machine comportant un tirant relié à chacun des bras par une articulation supérieure respective autorisant au moins un pivotement autour d'un axe supérieur parallèle à l'axe de pliage respectif.

Une telle machine agricole est connue du document EP 3 086 632 A1. Sur cette machine, un actionneur d'allégement de type ressort ou vérin hydraulique est articulé entre chaque bras et le groupe d'outils associé. L'actionneur d'allégement permet d'exercer sur un effort dirigé vers le haut sur le groupe d'outils respectif. Chaque groupe d'outils peut ainsi suivre le relief du sol en se déplaçant verticalement par rapport au cadre. Il est en outre divulgué dans chacun des documents CA 2 252 293 A1 et US 8 505 645 B1 une machine comportant un tirant relié à deux bras par une articulation supérieure autorisant un pivotement autour d'un axe parallèle à l'axe de pliage respectif. Dans ces documents, aucun effort n'est cependant exercé sur chaque groupe d'outils en position de travail, de sorte que la pression que les groupes d'outils exercent au sol est importante et détériore le tapis végétal du sol. Une machine semblable à ce qui est décrit plus haut est également connue des documents FR 2 085 920 A1 et US 4 790 389 A.

Cette machine est conçue de manière qu'en position de travail des groupes d'outils, chaque actionneur d'allégement a un fonctionnement indépendant de l'autre élément de support résilient. Il en découle que la pression exercée au sol par un groupe d'outils est indépendante de la pression exercée au sol par l'autre groupe d'outils. Un inconvénient d'un tel fonctionnement est que, lorsque le relief du sol amène un groupe d'outils en position de travail à se déplacer vers le haut par rapport au cadre, la pression maximale exercée par ledit groupe d'outils sur le sol augmente fortement, accroissant ainsi le risque de détérioration de la surface du sol. De surcroit, plus la pression d'un ou des groupes d'outils sur le sol est importante, plus la puissance à développer pour déplacer la machine durant le travail sera importante.

Le but de la présente invention est de proposer une machine agricole dont la pression maximale exercée par un groupe d'outils sur sol accidenté est plus faible afin que le tapis végétal soit préservé.

A cet effet, une importante caractéristique de l'invention consiste en ce que le tirant, le cadre et les bras forment chacun un côté d'un quadrilatère déformable de répartition en projection sur un plan transversal à la direction longitudinale.

Dans le cas d'un sol accidenté, le tirant transmet alors une partie de la pression exercée par un groupe d'outils sur le sol à l'autre groupe d'outils et permet ainsi de répartir l'effort des actionneurs d'allégement entre les deux groupes d'outils. Il en découle qu'un groupe d'outils en position de travail se déplaçant vers le haut par rapport au cadre en suivant le relief du sol, induit une augmentation moindre de la pression qu'il exerce sur le sol.

La solution au problème technique est apportée par l'objet de la revendication indépendante 1, définissant en soi l'invention. Des modes de réalisation préférés sont décrits dans les revendications dépendantes. D'autres modes de réalisation et avantages de l'invention ressortiront de la description ci-après avec référence aux dessins annexés qui représentent, à titre d'exemple non limitatif, plusieurs formes de réalisation de la machine agricole selon l'invention.

### Brève description des dessins

[Fig. 1] représente une vue en perspective d'une machine selon l'invention en position de travail des groupes d'outils et attelée à un tracteur à l'avant duquel est également attelé un équipement frontal.
[Fig. 2] représente une vue de dessus d'une machine selon l'invention en position de travail des groupes d'outils.
[Fig. 3] représente une vue de face d'une machine selon l'invention en position de travail nominale des groupes d'outils.
[Fig. 4] représente une vue de face d'une machine selon l'invention en position de manoeuvre des groupes d'outils.
[Fig. 5] représente une vue latérale d'une machine selon l'invention en position de travail des groupes d'outils.
[Fig. 6] représente une vue de face d'une machine selon l'invention en position de travail sur un sol accidenté.

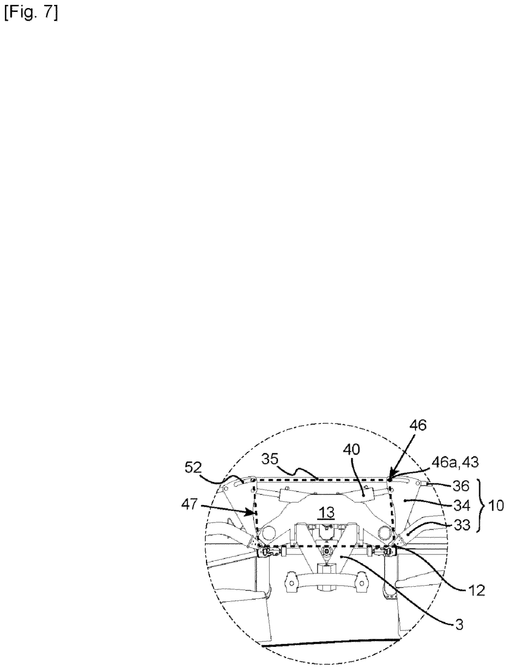

[Fig. 7] représente une vue de détail de la figure 6.
[Fig. 8] représente une vue de dessus d'une machine selon l'invention en position de transport.

Dans la description qui suit, les notions « avant », « arrière », « devant » et « derrière » sont définies en regardant dans un sens d'avance (A).

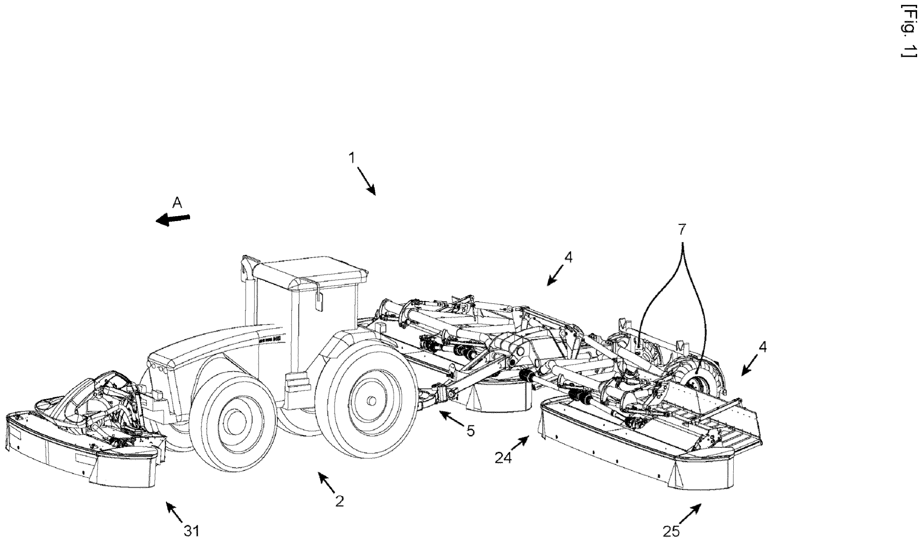

Ainsi qu'il ressort de la figure 1, la machine (1) agricole est destinée à être attelée à un tracteur (2). Le tracteur (2) est apte à déplacer la machine (1) dans le sens d'avance (A) et à l'animer. La machine (1) comporte un cadre (3, 13) et deux unités latérales (4), et de préférence seulement deux unités latérales (4). Elle comporte également un dispositif d'attelage (5) destiné à la raccorder au tracteur (2). Le dispositif d'attelage (5) est situé à l'extrémité avant du cadre (3, 13). Le cadre (3, 13) est situé de préférence derrière le tracteur (2) lorsque la machine (1) y est raccordée, bien que la machine (1) pourrait également être attelée à un attelage frontal. Le dispositif d'attelage (5) comporte deux tourillons inférieurs conçus pour venir s'accrocher aux bras d'attelage inférieurs du tracteur (2). Le cadre (3, 13) est articulé avec, de préférence sur, le dispositif d'attelage (5) autour d'un axe d'attelage (6) sensiblement vertical, et de préférence incliné vers l'avant.

Le cadre (3, 13) est muni d'au moins une roue (7), et de préférence deux, en contact avec le sol (S) et montée(s) pivotante(s) avec le cadre (3, 13) autour d'un axe de roulement (8) afin de reporter une partie du poids de la machine (1) sur le sol (S) et de faciliter son déplacement dans la direction du sens d'avance (A). L'axe de roulement (8) est situé à l'arrière du cadre (3, 13). Une partie du poids de la machine (1) est également reportée sur le tracteur (2) via le dispositif d'attelage (5).

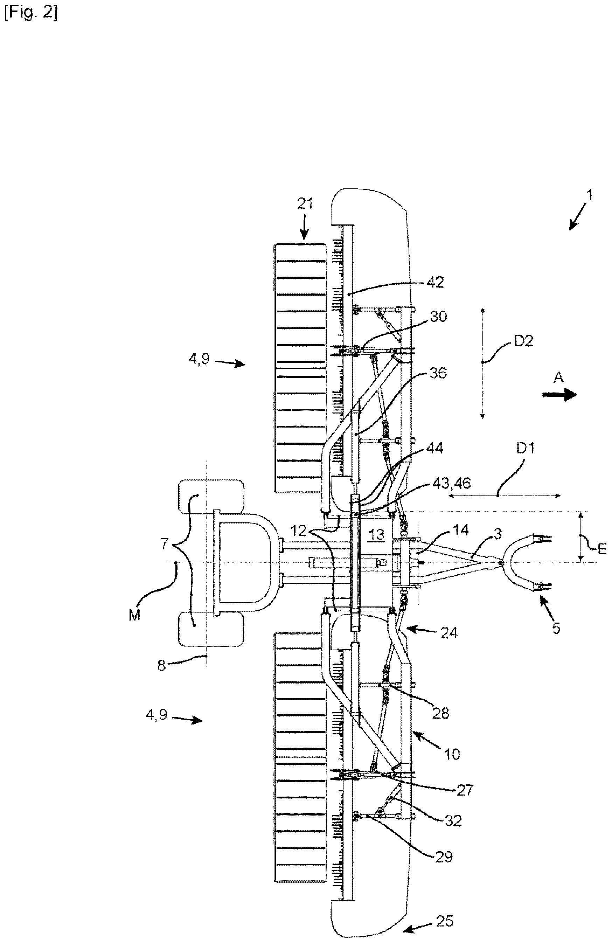

Tel que représenté sur la figure 2, le cadre (3, 13) s'étend dans une direction longitudinale (D1). La direction longitudinale (D1) est parallèle au sens d'avance (A), et de préférence orientée sensiblement horizontalement. Un plan médian (M) est orienté parallèlement à la direction longitudinale (D1), et de préférence sensiblement verticalement. Il est orienté perpendiculairement à l'axe de roulement (8). Le plan médian (M) passe en outre par l'axe d'attelage (6).

Chaque unité latérale (4) comporte un groupe d'outils (9) et un bras (10). Chaque bras (10), respectivement chaque unité latérale (4), est monté(e) pivotant(e) par rapport au cadre (3, 13) autour d'un axe de pliage (12) respectif via une articulation longitudinale (11). Chaque bras (10), respectivement chaque unité latérale (4), est relié(e) directement au cadre (3, 13), par l'articulation longitudinale (11) respective. Chaque groupe d'outils (9) est relié au cadre (3, 13), de préférence chacun d'un côté longitudinal respectif, par l'intermédiaire du bras (10) respectif.

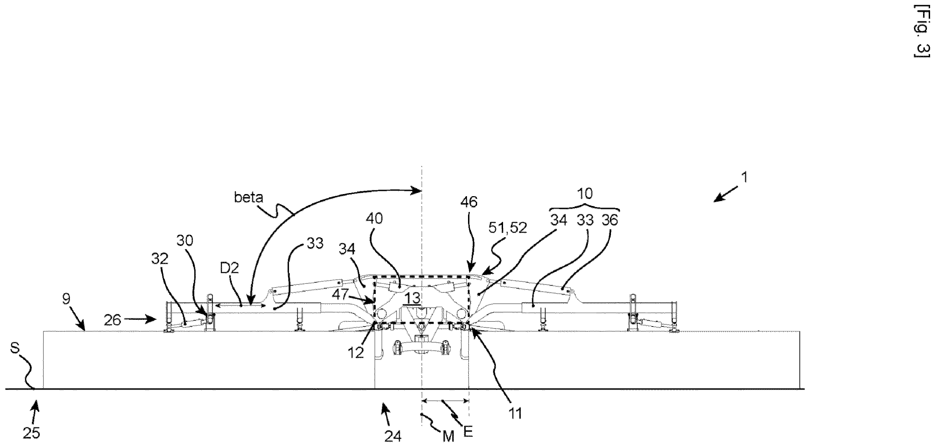

Chaque bras (10) est de forme allongée et présente une dimension longitudinale (D2). La dimension longitudinale (D2) est la dimension la plus importante d'un bras (10). La dimension longitudinale (D2) est sensiblement orthogonale à la direction longitudinale (D1), et de préférence sensiblement orthogonale au plan médian (M) lorsque les groupes d'outils (9) sont en position de travail nominale. Ainsi que représenté figure 3, dans la position de travail nominale des groupes d'outils (9), la machine (1) est sur un sol (S) plat, et de préférence horizontal. Dans cette position, les unités latérales (4), respectivement les groupes d'outils (9), sont symétriques par rapport au plan médian (M).

Chaque axe de pliage (12) est sensiblement parallèle au plan médian (M), et de préférence parallèle à la direction longitudinale (D1), au moins dans la position de travail des groupes d'outils (9). Chaque axe de pliage (12) pourrait cependant former avec la direction longitudinale (D1), un angle compris entre 0° et 45°.

Chaque unité latérale (4) comporte également un moyen de liaison (26). Chaque groupe d'outils (9) est relié au bras (10) respectif par le biais du moyen de liaison (26) respectif. Le moyen de liaison (26) est de préférence un agencement de bielles (27, 28, 29) directrices. Le moyen de liaison (26) comprend au moins deux bielles (27, 28, 29), et de préférence trois, à savoir une bielle supérieure (27), une bielle intérieure (28) et une bielle extérieure (29), sensiblement parallèles entre elles, au moins en projection sur le plan médian (M). On note que les bielle supérieure (27), bielle intérieure (28) et bielle extérieure (29) sont sensiblement parallèles entre elles également en projection sur le plan du sol (S). Le moyen de liaison (26) est configuré pour autoriser au groupe d'outils (9) respectif en position de travail à se déplacer par rapport au bras (10) respectif, au moins verticalement. Chaque groupe d'outils (9) peut par exemple pivoter par rapport au bras (10) respectif autour d'au moins un axe parallèle à la direction longitudinale (D1) grâce au moyen de liaison (26) respectif. Dans le mode de réalisation préféré et représenté sur les figures, les bielles (27, 28, 29) du moyen de liaison (26) permettent au groupe d'outils (9) respectif en position de travail de se déplacer librement par rapport au bras (10) respectif.

Chaque groupe d'outils (9) peut occuper une position de travail (figures 1 à 3, 5 et 6) dans laquelle il prend appui sur le sol (S). En position de travail d'un groupe d'outils (9), le poids de l'unité latérale (4) correspondante induit un couple dirigé vers le bas autour de l'axe de pliage (12) respectif et une pression du groupe d'outils (9) sur le sol (S). Dans un souci de simplification, on appelle dans ce document « pression d'un (ou des) groupe(s) d'outils (9) », la pression exercée par ce (ou les) groupe(s) d'outils (9) sur le sol (S).

Chaque moyen de liaison (26) comporte également un actionneur d'allégement (30) articulé d'une part au bras (10) respectif par le biais d'une articulation avant (37) et au groupe d'outils (9) respectif d'autre part. Chaque actionneur d'allégement (30) exerce un effort dirigé vers le haut sur le groupe d'outils (9) respectif en position de travail. Il est préférentiellement conçu par un vérin hydraulique dont une chambre est hydrauliquement reliée à un accumulateur précontraint en position de travail. Ainsi, l'actionneur d'allégement (30) permet de diminuer la pression dudit groupe d'outils (9) sur le sol (S). Ce faisant, l'actionneur d'allégement (30) reporte une partie du poids de l'unité latérale (4) respective sur le cadre (3,13) en position de travail du groupe d'outils (9) correspondant. Alternativement, chaque actionneur d'allégement (30) peut être conçu par un ressort ou autre support résilient analogue.

On note que lorsqu'un groupe d'outils (9) en position de travail se déplace vers le bas par rapport au cadre (3, 13), la distance entre le bras (10) respectif et ledit groupe d'outils (9) augmente, de même que l'effort exercé par l'actionneur d'allégement (30) respectif sur ce groupe d'outils (9). Il en résulte une diminution de la pression exercée sur le sol (S) par le groupe d'outils (9) concerné. On note également que le bras (10) correspondant pivote dans ce cas vers le bas autour de l'axe de pliage (12) respectif, augmentant l'angle d'orientation (beta) respectif. Lorsque la longueur d'un actionneur d'allégement (30) est maximale, la distance entre le bras (10) et le groupe d'outils (9) respectifs est de préférence minimale.

De manière réciproque, lorsqu'un groupe d'outils (9) en position de travail se déplace vers le haut par rapport au cadre (3, 13), la distance entre ledit groupe d'outils (9) et le bras (10) correspondant diminue, diminuant l'effort appliqué par l'actionneur d'allégement (30) respectif sur ledit groupe d'outils (9). La pression exercée sur le sol (S) par ledit groupe d'outils (9) augmente alors, et l'angle d'orientation (beta) respectif diminue.

Tel qu'il est visible sur la figure 3, chaque bras (10) comporte une potence (33), un culbuteur (34) et un actionneur de transport (36). La potence (33) est articulée au cadre (3, 13) autour de l'axe de pliage (12) respectif. La potence (33) est reliée au groupe d'outils (9) respectif par le biais du moyen de liaison (26) respectif.

Chaque culbuteur (34) est articulé avec le cadre (3, 13) autour d'un axe parallèle à l'axe de pliage (12), et de préférence autour de l'axe de pliage (12) respectif. L'actionneur de transport (36) est articulé avec le culbuteur (34) respectif d'une part et avec la potence (33) respective d'autre part, de préférence autour d'articulations d'axes parallèles à l'axe de pliage (12). En position de travail d'un groupe d'outils (9), la longueur de l'actionneur de transport (36) respectif est fixe, et de préférence minimum. Chaque bras (10) est ainsi rigide au moins en position de travail du groupe d'outils (9) respectif.

Une importante caractéristique de l'invention consiste en ce que la machine (1) comporte un tirant (35) relié, de préférence directement, à chacun des bras (10) par une articulation supérieure (46) respective autorisant au moins un pivotement autour d'un axe supérieur (46a) parallèle à l'axe de pliage (12) respectif. Le tirant (35) est ainsi monté pivotant avec, et de préférence sur, chaque bras (10) par l'articulation supérieure (46) respective autour de l'axe de pliage (12).

Grâce à cette caractéristique, lorsque, en position de travail des groupes d'outils (9), le relief du sol (S) implique qu'un des groupes d'outils (9) exerce sur le sol (S) une pression différente que lorsque la machine (1) est sur un sol (S) plat et horizontal, la pression totale exercée sur le sol (S) par les groupes d'outils (9) est répartie entre les deux groupes d'outils (9). Le tirant (35) ne permet une répartition de la pression entre les deux groupes d'outils (9) si et seulement si la machine (1) ne comporte que deux unités latérales (4).

Il est souligné que la transmission de la pression exercée par un groupe d'outils (9) sur le sol (S) vers l'autre groupe d'outils (9) est instantanée. Une pression initiale fait référence à la pression d'un groupe d'outils (9) « avant » la transmission de pression (ou répartition). La pression résultante fait référence à la pression « après » la répartition, c'est-à-dire la pression réelle d'un groupe d'outils (9). Lorsque le mot « pression » n'est pas suivi d'un attribut, il est fait référence à la pression résultante. La pression maximale est la plus importante des pressions des groupes d'outils (9). La pression totale des groupes d'outils (9) est l'addition des pressions des groupes d'outils (9). Bien entendu, la pression totale initiale est égale à la pression totale résultante.

Ainsi, une partie de la pression initiale d'un premier groupe d'outils (9) dont la pression initiale est la plus importante est transmise par le tirant (35) vers le deuxième groupe d'outils (9) (dont la pression initiale est la plus faible), de manière que la pression résultante du premier groupe d'outils (9) est moindre que sa pression initiale. En d'autres termes, le groupe d'outils (9) dont la pression initiale est la plus faible supporte une partie de la pression initiale de l'autre groupe d'outils (9) (dont la pression initiale est la plus importante et) dont la pression résultante est alors plus faible que la pression initiale. Grâce à la mise en place du tirant (35), la pression maximale exercée par les groupes d'outils (9) sur le sol (S) est plus faible, ce qui présente l'avantage de préserver la surface du sol (S) et de diminuer la puissance nécessaire pour déplacer la machine (1) durant le travail.

On parle de position d'un groupe d'outils (9) par rapport au cadre (3, 13) en comparaison de la position dudit groupe d'outils (9), plus précisément de la position de l'articulation avant (37) respective, avec sa position en position de travail nominale des groupes d'outils (9). Dans une configuration symétrique, le relief du sol (S) implique que les groupes d'outils (9) sont dans une même position (basse, de travail nominale ou haute) par rapport au châssis (3, 13). Dans une configuration symétrique, le tirant (35) n'implique aucune répartition des pressions des groupes d'outils (9), et la pression initiale d'un groupe d'outils (9) est égale à sa pression résultante.

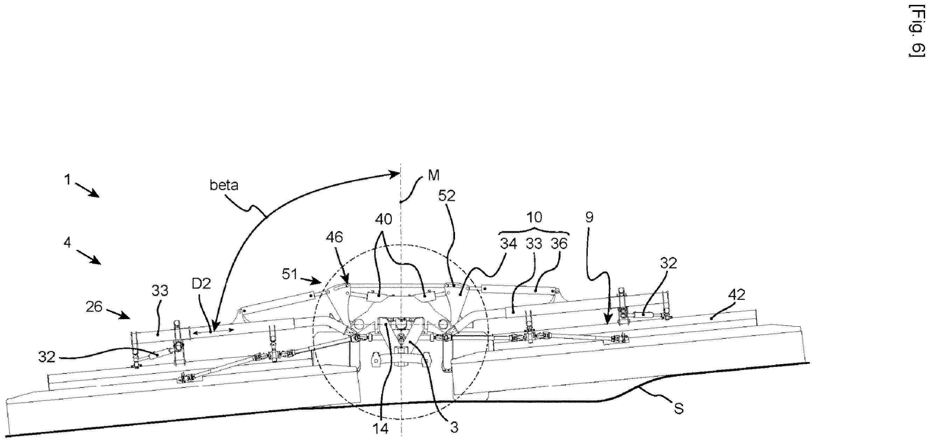

Dans une configuration asymétrique (exemple figure 6), un premier groupe d'outils (9) (à droite sur la figure 6) est plus haut par rapport au cadre (3, 13) que le deuxième groupe d'outils (9), impliquant que la pression initiale du premier groupe d'outils (9) est plus importante que celle du deuxième groupe d'outils (9). Le deuxième groupe d'outils (9) supporte alors une partie de la pression initiale du premier groupe d'outils (9) engendrant une pression résultante du premier groupe d'outils (9) plus faible que sa pression initiale.

En outre, dans l'exemple précité, la pression résultante du deuxième groupe d'outils (9) est plus importante que sa pression initiale. Grâce à la mise en place du tirant (35) la pression minimale des groupes d'outils (9) est ainsi augmentée, ce qui présente un avantage du fait que, lorsque la pression d'un groupe d'outils (9) est trop faible, ce groupe d'outils (9) s'adapte moins rapidement au relief du sol (S) de sorte que son travail est moins régulier et de moindre qualité.

Selon une caractéristique de l'invention, le tirant (35), le cadre (3, 13) et les bras (10) forment chacun un côté d'un quadrilatère déformable de répartition (47) en projection sur un plan transversal, et de préférence orthogonal, à la direction longitudinale (D1). Le quadrilatère déformable de répartition (47) pourrait également être désigné par « mécanisme à quatre barres ». Chaque côté du quadrilatère déformable de répartition (47) est de longueur fixe. Le côté du quadrilatère déformable de répartition (47) formé par un bras (10), et de préférence par le culbuteur (34), est orienté sensiblement parallèlement au plan médian (M) en configuration symétrique. Chaque culbuteur (34), respectivement bras (10), est ainsi articulé avec le tirant (35) au niveau d'une articulation supérieure (46) respective d'axe supérieur (46a) parallèle à l'axe de pliage (12). Les côtés du quadrilatère déformable de répartition (47), sont ainsi articulés autour des deux articulations longitudinales (11) et des deux articulations supérieures (46). Les articulations (11, 46) du quadrilatère déformable de répartition (47) peuvent être des rotules, mais sont de préférence réalisées par des articulations pivot autour des axes de pliage (12) et des axes supérieurs (46a). Ainsi qu'il ressort de la figure 3, en position de travail, les articulations supérieures (46) sont situées au dessus des axes de pliage (12). Chaque côté du quadrilatère déformable de répartition (47) est rigide, et de préférence réalisé par un seul corps rigide, à savoir le tirant (35), un bras (10), le cadre (3, 13) et l'autre bras (10).

Tel qu'il est représenté sur la figure 3, la distance séparant un axe de pliage (12) et l'axe supérieur (46a) respectif est égale à la distance entre l'autre axe de pliage (12) et l'autre axe supérieur (46a), au moins en position de travail des groupes d'outils (9). De plus, la distance entre les axes de pliage (12) est sensiblement égale à la distance entre les axes supérieurs (46a). Ainsi, au moins en position de travail des groupes d'outils (9), le quadrilatère déformable de répartition (47) est un parallélogramme, vu selon la direction longitudinale (D1). Le pivotement d'un bras (10) autour de l'axe de pliage (12) respectif implique alors un pivotement de l'autre bras (10) selon un angle égal et dans le sens de rotation contraire.

En position de travail nominale des groupes d'outils (9), les actionneurs d'allégement (30) sont agencés de manière à exercer sensiblement le même effort sur leur groupe d'outils (9) respectif, de sorte que la pression exercée par un groupe d'outils (9) sur le sol (S) est égale à la pression exercée par l'autre groupe d'outils (9) sur le sol (S). De cette manière, la pression maximale exercée par les groupes d'outils (9) sur le sol (S) est également réduite en configuration symétrique.

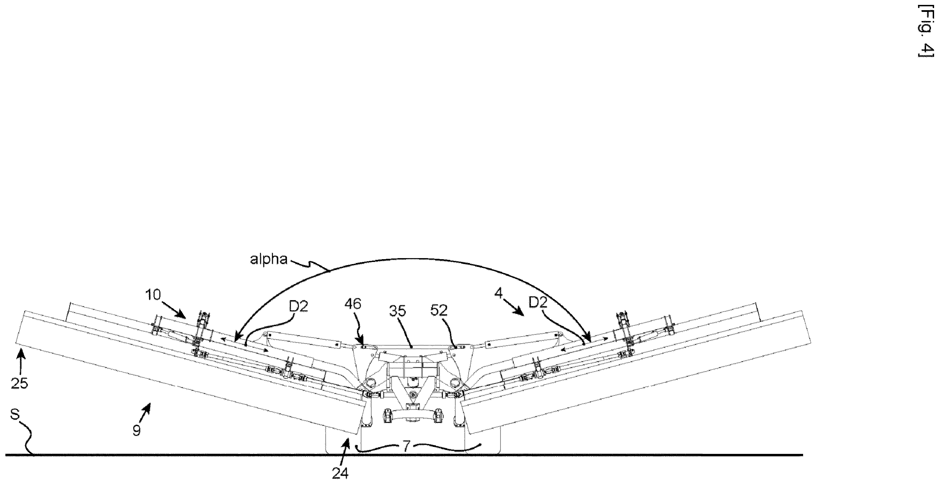

Ainsi que représenté figure 4, il est prévu que chaque groupe d'outils (9) puisse occuper une position de manoeuvre dans laquelle le groupe d'outils (9) est éloigné du sol (S). En position de manoeuvre d'un groupe d'outils (9), l'extrémité extérieure (25) d'un groupe d'outils (9) est plus éloignée du sol (S) que l'extrémité intérieure (24) dudit groupe d'outils (9). En outre, en position de manoeuvre, comme en position de travail, la dimension longitudinale (D2) d'un groupe d'outils (9) est sensiblement perpendiculaire au plan médian (M) en vue de dessus.

Il ressort de la figure 3 que chaque bras 10 est éloigné du sol (S). Chaque bras (10) est situé au moins partiellement au dessus du groupe d'outils (9) respectif en position de travail, et de préférence aussi en position de manoeuvre.

De manière à aboutir à la position de manoeuvre d'un groupe d'outils (9), ledit groupe d'outils (9) est pivoté depuis sa position de travail autour de l'axe de pliage (12) respectif selon un angle de manoeuvre prédéterminé. A cet effet, à chaque bras (10) est associé un actionneur de manoeuvre (40). Chaque actionneur de manoeuvre (40) est articulé d'une part avec le cadre (3, 13), et d'autre part avec le bras (10) respectif, respectivement avec le culbuteur (34) respectif, de préférence autour d'axes parallèles à l'axe de pliage (12) respectif.

La plage de pivotement d'un bras (10), respectivement d'une unité latérale (4), autour de l'axe de pliage (12) est limitée en amplitude. En position de travail d'un groupe d'outils (9), l'angle d'orientation (beta) respectif peut ainsi évoluer entre une valeur minimale et une valeur de travail maximale. Lorsque l'actionneur de manoeuvre (40) présente sa longueur maximale (à gauche sur la figure 6), l'angle d'orientation (beta) présente sa valeur de travail maximale. Dans un mode de réalisation préféré, la valeur de travail maximale de l'angle d'orientation (beta) est comprise entre 70° et 120°, de préférence entre 80° et 110°, et plus préférentiellement encore entre 90° et 100°.

Un angle d'ouverture (alpha) est formé par les dimensions longitudinales (D2) vu selon la direction longitudinale (D1). Il est égal à la somme des angles d'orientation (beta). En position de travail nominale des groupes d'outils (9), l'angle d'ouverture (alpa) présente une valeur nominale. En position de travail des groupes d'outils (9), le poids de chaque unité latérale (4) induit un effort sur le tirant (35) de sorte que, tant que l'angle d'ouverture (alpha) présente la valeur nominale, les bras (10) exercent un effort sur le tirant (35).

Dans un mode de réalisation non représenté, en position de travail des groupes d'outils (9), l'angle d'ouverture (alpha) est constant quel que soit le relief du sol (S). Dans le mode de réalisation préféré, afin d'augmenter la plage de pivotement des bras (10), il est prévu un agencement (51) du ou des bras (10) et/ou du tirant (35) permettant à l'angle d'ouverture (alpha) de présenter une valeur inférieure à la valeur nominale.

L'agencement (51) permet aux bras (10) de pivoter vers le haut même si l'angle d'orientation (beta) d'un bras (10) présente sa valeur de travail maximale. L'agencement (51) permet ainsi une meilleure adaptation de la machine (1) à un sol (S) accidenté. On entend par « sol (S) accidenté » un sol (S) qui n'est pas parfaitement plat. La surface d'un sol (S) accidenté présente ainsi un relief et/ou des inégalités. La valeur nominale de l'angle d'ouverture (alpha) est supérieure à 140°, plus préférentiellement à 160°, et plus préférentiellement encore à 175°.

Selon le mode de réalisation préféré et représenté sur la figure 6, l'agencement (51) consiste en des trous oblongs (52) pratiqués dans chacun des bras (10) et dans lequel l'articulation supérieure (46) respective peut coulisser. Le tirant (35) est réalisé par une bielle rigide et l'articulation supérieure (46) par un pivot (43) d'axe supérieur (46a) respectif. Le tirant (35) est tel qu'il est apte à transmettre un effort de traction entre les bras (10). Le culbuteur (34) comprend de préférence deux plaques (44) parallèles dans chacune desquelles un orifice oblong (52) est réalisé. Le pivot (43) peut coulisser dans le ou chaque orifice oblong (52).

Lorsque l'angle d'ouverture (alpha) présente la valeur nominale, les articulations supérieures (46) sont situées aux extrémités intérieures du trou oblong (52). Lorsque la valeur de l'angle d'ouverture (alpha) est inférieure à la valeur nominale, les bras (10) n'exercent pas d'effort sur le tirant (35) de sorte qu'au moins une des articulations supérieures (46) n'est pas située à l'extrémité intérieure du trou oblong (52) respectif.

Dans un mode de réalisation alternatif non représenté, l'agencement (51) est réalisé par le tirant (35) comprenant ou constitué par un actionneur, une chaîne, un câble ou analogue.

Ainsi qu'il ressort de la figure 4, en position de manoeuvre des groupes d'outils (9), chaque angle d'orientation (beta) est à sa valeur minimale. Dans un mode de réalisation préféré, lorsqu'un angle d'orientation (beta) présente sa valeur minimale, l'articulation supérieure (46) respective est située à l'extrémité extérieure du trou oblong (52). L'agencement (51) permet ainsi un meilleur dégagement des groupes d'outils (9) par rapport au sol (S) en position de manoeuvre. La valeur minimale de l'angle d'orientation (beta) est comprise entre 50° et 110°, de préférence entre 70° et 90°, et plus préférentiellement encore entre 70° et 80°.

De manière simple, les actionneurs de manoeuvres (40) sont réalisés par des vérins, de préférence hydraulique à double effet. En position de travail d'un groupe d'outils (9), afin d'autoriser le pivotement de l'unité latérale (4) respective, respectivement de son bras (10), l'actionneur de manoeuvre (40) respectif est monté flottant. La longueur d'actionneur monté flottant s'adapte suivant les efforts auxquels il est soumis.

En position de travail des groupes d'outils (9), les actionneurs de manoeuvre (40) sont reliés entre eux par un circuit hydraulique, permettant de préférence une circulation libre de l'huile entre eux. Ainsi, la position flottante des actionneurs de manoeuvres (40) est réalisée de manière simple, sans nécessiter plusieurs distributeurs hydraulique du tracteur (2). Un dispositif de commande permet alors de régler la longueur des actionneurs de manoeuvre (40) simultanément, par exemple pour atteindre la position de manoeuvre des groupes d'outils (9).

Alternativement, en position de travail des groupes d'outils (9), chaque actionneur de manoeuvre (40) est relié à un distributeur hydraulique propre du tracteur (2), de préférence en position flottante. Selon une autre variante de réalisation, en position de travail du groupe d'outils (9) respectif, chaque actionneur de manoeuvre (40) est relié à un accumulateur de pression de sorte à exercer un effort vers le haut sur le bras (10) respectif, respectivement sur ledit groupe d'outils (9), permettant de réduire davantage la pression dudit groupe d'outils (9) en sus de l'effort exercé par l'actionneur d'allégement (30) respectif.

Un ou le dispositif de commande peut également être réglé de manière à pouvoir actionner chacun des actionneurs de manoeuvre (40) séparément, de sorte que la machine (1) puisse occuper une position de travail dite partielle, dans laquelle un groupe d'outils (9) est en position de manoeuvre tandis que l'autre groupe d'outils (9) est en position de travail. Dans la position de travail partielle, l'actionneur de manoeuvre (40) correspondant au groupe d'outils (9) en position de travail est réglé à une longueur fixe prédéterminée, de préférence une longueur médiane entre sa longueur minimale et sa longueur maximale, de manière à reporter une partie du poids de l'unité latérale (4) correspondante sur le cadre (3, 13) et à diminuer la pression exercée au sol (S) par ce groupe d'outils (9).

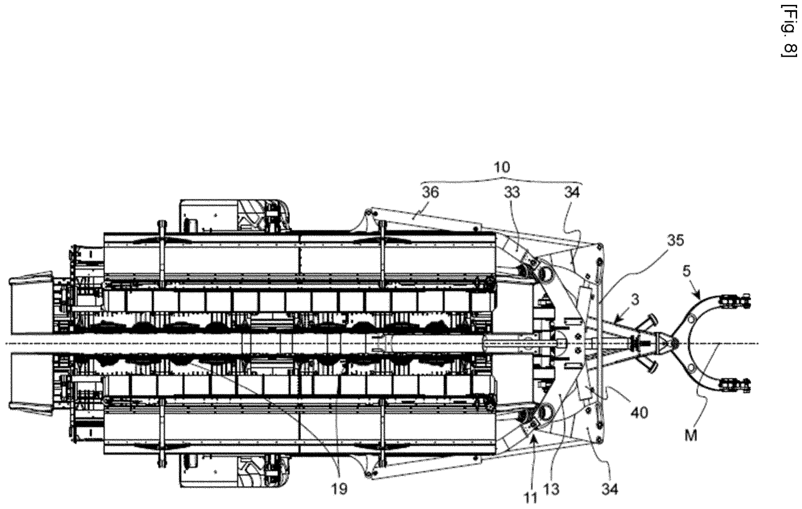

Afin de transposer la machine (1) entre la position de travail et une position de transport des groupes d'outils (9), le cadre (3, 13) comporte un basculeur (13) et un châssis (3) articulés entre eux autour d'un axe de basculement (14) transversal à la direction longitudinale (D1), et de préférence orthogonal au plan médian (M). En position de manoeuvre et de travail des groupes d'outils (9), le cadre (3, 13) est rigide. Pour passer de la position de travail à la position de transport, l'arrière du basculeur (13) est basculé à environ 90° vers le haut, et de préférence vers l'avant, autour de l'axe de basculement (14). L'actionneur de transport (36) permet alors avantageusement de déplacer les groupes d'outils (9) dans une position de transport. Ainsi que représentée sur la figure 8, dans la position de transport la longueur des groupes d'outils (9) est sensiblement parallèle au plan médian (M). On note que l'angle d'orientation (beta) est supérieur à sa valeur de travail maximale en position de transport. Dans la position de transport, les unités latérales (4) sont éloignées du sol (S).

Chaque bielle (27, 28, 29) est articulée, de préférence directement, avec le bras (10) respectif d'une part, et au groupe d'outils (9) respectif d'autre part. Les articulations des bielles (27, 28, 29) avec le bras (10) respectif, ainsi que les articulations des bielles (27, 28, 29) avec le groupe d'outils (9) respectif peuvent être de type cardan, et sont de préférence des rotules.

En projection sur le plan médian (M), les bielles intérieure (28) et extérieure (29) forment, chacune, un quadrilatère déformable dit d'allégement, avec la bielle supérieure (27), le bras (10) et le groupe d'outils (9) respectifs. Chaque actionneur d'allégement (30) est monté flottant en position de travail du groupe d'outils (9) respectif. En outre, en position de travail du groupe d'outils (9) respectif, l'actionneur d'allégement (30) est relié à un accumulateur. Grâce au(x) quadrilatère(s) déformable(s) d'allégement, le moyen de liaison (26) est ainsi configuré pour autoriser le groupe d'outils (9) en position de travail à se déplacer sensiblement verticalement par rapport au bras (10) respectif, de sorte à pouvoir suivre le relief du sol (S). L'actionneur de manoeuvre (30) peut en plus être relié au tracteur (2) de sorte à ajuster la pression dans l'accumulateur, ce qui permet de régler la pression exercée par le groupe d'outils (9) respectif sur le sol (S). Lorsque le groupe d'outils (9) n'est pas en position de travail (par exemple en position de manoeuvre d'un groupe d'outils (9)), la longueur de l'actionneur d'allégement (30) est fixe, et présente de préférence sa longueur maximale, de manière à empêcher tout débattement dudit groupe d'outils (9) par rapport au bras (10) respectif.

En projection sur un plan perpendiculaire au plan médian (M) et parallèle à la direction longitudinale (D1), les bielles intérieure (28) et extérieure (29) forment, chacune, un quadrilatère déformable dit de recouvrement avec la bielle supérieure (27), le bras (10) et le groupe d'outils (9) respectifs. Le ou les quadrilatère(s) de recouvrement est(sont) préférentiellement déformable(s) grâce à un actionneur de recouvrement (32). Le moyen de liaison (26) est ainsi configuré pour autoriser chaque groupe d'outils (9) en position de travail à se déplacer sensiblement horizontalement par rapport au bras (10) respectif. L'espacement (E) est la distance entre chaque groupe d'outils (9) et le plan médian (M). L'espacement (E) est réglable grâce à l'actionneur de recouvrement (32). La partie située entre les groupes d'outils (9) n'étant pas travaillée par la machine (1), le réglage du ou des espacement(s) (E) permet de s'adapter à la largeur d'un équipement frontal (31) et/ou d'ajuster le recouvrement entre la ou les unités latérales (4) et ledit équipement frontal (31). Il est envisageable qu'un ou les espacement(s) (E) soit réglé(s) pour être égal à zéro.

Les actionneurs de recouvrement (32) peuvent être reliés entre eux de sorte que, en position de travail des groupes d'outils (9), quel que soit la valeur d'un espacement (E), les deux espacements (E) sont constamment égaux. De cette manière, la pression maximale exercée par les groupes d'outils (9) sur le sol (S) est également réduite en configuration symétrique.

Dans une variante de réalisation, il est envisageable que les poids des unités latérales (4) et/ou les espacements (E) ne soient pas égaux, et/ou que le quadrilatère déformable de répartition (47) ne soit pas un parallélogramme. Un système de compensation réglable électroniquement et/ou comportant des capteurs, permet alors d'ajuster dynamiquement l'effort de chaque actionneur d'allégement (30) individuellement, de préférence de sorte que les pressions des groupes d'outils (9) soient constamment égales. Par exemple, pour répartir les pressions des groupes d'outils (9), il est possible d'évaluer chaque ou les espacement(s) (E) à l'aide d'au moins un capteur et de transmettre cette mesure à une unité de commande de la machine (1) qui adapte alors automatiquement la pression exercée au sol par au moins un des groupes d'outils (9), en commandant de préférence au moins un des actionneurs d'allégement (30).

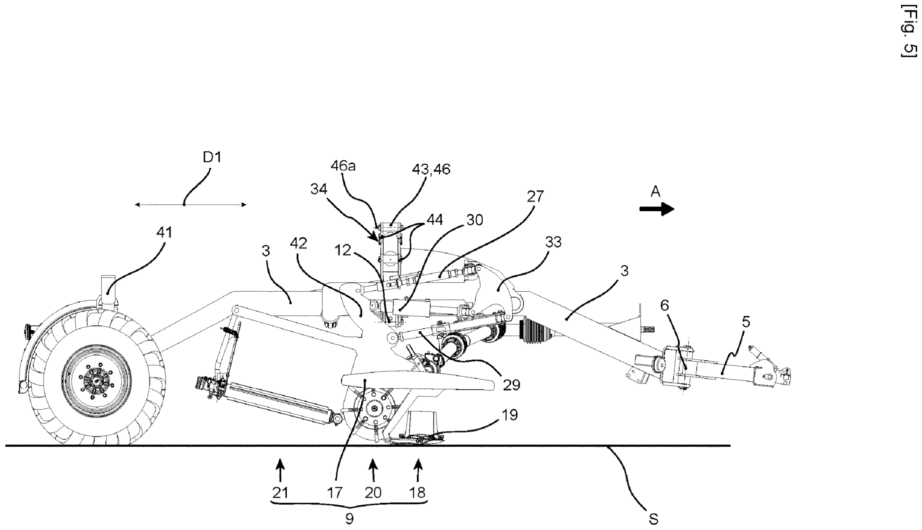

Tel qu'illustré sur la figure 5, dans le mode de réalisation préféré, chaque groupe d'outils (9) comprend au moins un dispositif de fauche (18). Chaque dispositif de fauche (18) est équipé d'une pluralité de rotors (19), tels que des disques ou des tambours. Lorsque la machine (1) est animée par le tracteur (2), les rotors (19) sont entrainés en rotation autour d'axes sensiblement verticaux. Les rotors (19) sont munis de couteaux qui s'étendent au-delà de la périphérie des rotors (19). Les rotors (19) sont disposés à intervalles plus ou moins réguliers sur le dispositif de fauche (18). Ils sont entrainés en rotation par le bas, de préférence au moyen d'un train de pignons incorporés dans un carter étanche contenant un lubrifiant. Grâce à l'avance de la machine (1) et à la rotation des couteaux, ces derniers coupent le produit, tel que des végétaux sur pied. Le train de pignons est actionné par des moyens de transmission aptes à transmettre l'énergie nécessaire depuis le tracteur (2).

Chaque groupe d'outils (9) peut également comprendre au moins un conditionneur (20) et/ou un groupeur (21) situés, en position de travail dudit groupe d'outils (9), derrière le dispositif de fauche (18) respectif. Chaque unité latérale (4) comporte en sus un bâti (42) qui relie le groupe d'outils (9) au dispositif de liaison (26) respectif. Les bielles (27, 28, 29) sont directement articulées avec le bâti (42). Le bâti (42) est fixé rigidement avec le groupe d'outils (9) respectif. Le bâti (42) permet de supporter le groupe d'outils (9) respectif, et le groupeur (21) le cas échéant.

Chaque groupe d'outils (9) peut également ou alternativement comprendre au moins un rotor d'andainage ou de fanage comportant un moyeu sur lequel sont fixés plusieurs bras portant des fourches ou dents flexibles à leurs extrémités libres, lequel au moins au rotor est entrainé en rotation autour d'un axe d'entrainement sensiblement vertical et équipé d'au moins une roue d'appui sur le sol (S). Chaque groupe d'outils (9) pourrait également comporter au moins un rotor entrainé autour d'un axe horizontal et muni de marteaux de coupe ou fléaux.

Les actionneurs (30, 32, 36, 40) peuvent par exemple être réalisés sous la forme de vérins hydrauliques, de vérins pneumatiques, et/ou de moteurs hydrauliques ou électriques, ou encore sous la forme de ressorts.

La machine qui vient d'être décrite, n'est qu'un exemple de réalisation qui ne saurait limiter le domaine de protection défini par les revendications suivantes.

## Revendications

1. Machine (1) agricole destinée à être attelée à un tracteur (2) et comportant deux unités latérales (4) et un cadre (3, 13) qui s'étend dans une direction longitudinale (D1), chaque unité latérale (4) comportant un bras (10) monté pivotant par rapport au cadre (3, 13) autour d'un axe de pliage (12) respectif orienté sensiblement parallèlement à la direction longitudinale (D1), chaque unité latérale (4) comportant un groupe d'outils (9) relié au cadre (3, 13) par l'intermédiaire du bras (10) respectif et pouvant occuper une position de travail dans laquelle il prend appui sur le sol (S), chaque unité latérale (4) comportant un moyen de liaison (26) qui est configuré pour autoriser au groupe d'outils (9) respectif à se déplacer par rapport au bras (10) respectif et qui comporte un actionneur d'allégement (30) exerçant sur chaque groupe d'outils (9) en position de travail un effort dirigé vers le haut, la machine (1) comportant un tirant (35) relié à chacun des bras (10) par une articulation supérieure (46) respective autorisant au moins un pivotement autour d'un axe supérieur (46a) parallèle à l'axe de pliage (12) respectif, **caractérisée en ce que** le tirant (35), le cadre (3, 13) et les bras (10) forment chacun un côté d'un quadrilatère déformable de répartition (47) en projection sur un plan transversal à la direction longitudinale (D1).

2. Machine agricole selon l'une des revendications 1, **caractérisée en ce que**, lorsque les groupes d'outils (9) sont en position de travail et que la machine (1) est sur un sol (S) plat, les actionneurs d'allégement (30) sont agencés de manière à exercer le même effort sur leur groupe d'outils (9) respectif.

3. Machine agricole selon l'une des revendications 1 à 2, **caractérisée en ce que** le quadrilatère déformable de répartition (47) est un parallélogramme.

4. Machine agricole selon l'une des revendications 1 à 3, **caractérisée en ce qu'**il est prévu un agencement (51) d'un ou des bras (10) et/ou du tirant (35) permettant à l'angle d'ouverture (alpha) formé par les dimensions longitudinales (D2) des bras (10) de présenter une valeur inférieure à la valeur qu'il présente en position de travail nominale des groupes d'outils (9).

5. Machine agricole selon l'une des revendications 1 à 4, **caractérisée en ce que** le tirant (35) est réalisé par une bielle rigide.

6. Machine agricole selon l'une des revendications 1 à 5, **caractérisée en ce qu'**à chaque bras (10) est associé un actionneur de manoeuvre (40) articulé d'une part avec le cadre (3, 13), et d'autre part avec ledit bras (10), et **en ce qu'**au moins en position de travail des groupes d'outils (9), les actionneurs de manoeuvre (40) sont reliés entre eux.

7. Machine agricole selon l'une des revendications 1 à 6, **caractérisée en ce que** les actionneurs de manoeuvre (40) peuvent être actionnés séparément de sorte qu'un groupe d'outils (9) est en position de manoeuvre tandis que l'autre groupe d'outils (9) est en position de travail.

8. Machine agricole selon l'une des revendications 1 à 7, **caractérisée en ce que** l'espacement (E) est défini comme la distance entre chaque groupe d'outils (9) et le plan médian (M), et **en ce que** en position de travail des groupes d'outils (9), le moyen de liaison (26) est configuré pour autoriser les groupes d'outils (9) à se déplacer sensiblement horizontalement par rapport au bras (10) respectif, et de sorte que, les deux espacements (E) sont constamment égaux.

9. Machine agricole selon la revendication 1, **caractérisée en ce qu'** afin de transposer la machine (1) entre la position de travail et une position de transport des groupes d'outils (9), le cadre (3, 13) comporte un basculeur (13) commun aux deux unités latérales (4) et articulé avec le châssis (3) autour d'un axe de basculement (14) transversal à la direction longitudinale (D1).

## Patentansprüche

1. Landwirtschaftliche Maschine (1), die dazu bestimmt ist, an einen Schlepper (2) angehängt zu werden und zwei Seiteneinheiten (4) und einen Rahmen (3, 13) umfasst, der sich in einer Längsrichtung (D1) erstreckt, wobei jede Seiteneinheit (4) einen Arm (10) umfasst, der in Bezug auf den Rahmen (3, 13) um eine jeweilige im Wesentlichen zur Längsrichtung (D1) parallel ausgerichtete Faltachse (12) schwenkbar angebracht ist, wobei jede Seiteneinheit (4) eine Werkzeuggruppe (9) umfasst, die über den jeweiligen Arm (10) mit dem Rahmen (3, 13) verbunden ist und eine Arbeitsstellung einnehmen kann, in der sie sich auf dem Boden (S) abstützt, wobei jede Seiteneinheit (4) ein Verbindungsmittel (26) umfasst, das derart ausgelegt ist, dass sich die jeweilige Werkzeuggruppe (9) in Bezug auf den jeweiligen Arm (10) verlagern kann, und das einen Erleichterungsaktuator (30) umfasst, der auf jede Werkzeuggruppe (9) in Arbeitsstellung eine nach oben gerichtete Kraft ausübt, wobei die Maschine (1) eine Zugstange (35) umfasst, die mit jedem der Arme (10) über ein jeweiliges Obergelenk (46) verbunden ist, das mindestens ein Schwenken um eine zur jeweiligen Faltachse (12) parallele obere Achse (46a) gestattet, **dadurch gekennzeichnet, dass** die Zugstange (35), der Rahmen (3, 13) und die Arme (10) jeweils eine Seite eines verformbaren Verteilungsvierecks (47) in der Projektion auf eine quer zur Längsrichtung (D1) verlaufende Ebene bilden.

2. Landwirtschaftliche Maschine nach Anspruch 1, **dadurch gekennzeichnet, dass**, wenn sich die Werkzeuggruppen (9) in Arbeitsstellung befinden und sich die Maschine (1) auf einem ebenen Boden (S) befindet, die Erleichterungsaktuatoren (30) so angeordnet sind, dass sie die gleiche Kraft auf ihre jeweilige Werkzeuggruppe (9) ausüben.

3. Landwirtschaftliche Maschine nach einem der Ansprüche 1 bis 2, **dadurch gekennzeichnet, dass** das verformbare Verteilungsviereck (47) ein Parallelogramm ist.

4. Landwirtschaftliche Maschine nach einem der Ansprüche 1 bis 3, **dadurch gekennzeichnet, dass** eine Anordnung (51) eines bzw. der Arme (10) und/oder der Zugstange (35) vorgesehen ist, die es ermöglicht, dass der Öffnungswinkel (alpha), der durch die Längsabmessungen (D2) der Arme (10) gebildet wird, einen Wert aufweist, der kleiner ist als der Wert, den er in Soll-Arbeitsstellung der Werkzeuggruppen (9) aufweist.

5. Landwirtschaftliche Maschine nach einem der Ansprüche 1 bis 4, **dadurch gekennzeichnet, dass** die Zugstange (35) durch eine starre Stange ausgeführt ist.

6. Landwirtschaftliche Maschine nach einem der Ansprüche 1 bis 5, **dadurch gekennzeichnet, dass** jedem Arm (10) ein Manövrieraktuator (40) zugeordnet ist, der einerseits mit dem Rahmen (3, 13) und andererseits mit dem Arm (10) gelenkig verbunden ist, und dass zumindest in Arbeitsstellung der Werkzeuggruppen (9) die Manövrieraktuatoren (40) miteinander verbunden sind.

7. Landwirtschaftliche Maschine nach einem der Ansprüche 1 bis 6, **dadurch gekennzeichnet, dass** die Manövrieraktuatoren (40) getrennt betätigt werden können, so dass sich eine Werkzeuggruppe (9) in Manövrierstellung befindet, während sich die andere Werkzeuggruppe (9) in Arbeitsstellung befindet.

8. Landwirtschaftliche Maschine nach einem der Ansprüche 1 bis 7, **dadurch gekennzeichnet, dass** der Zwischenraum (E) als der Abstand zwischen jeder Werkzeuggruppe (9) und der Mittelebene (M) definiert ist und dass, in Arbeitsstellung der Werkzeuggruppen (9), das Verbindungsmittel (26) derart ausgelegt ist, dass sich die Werkzeuggruppen (9) im Wesentlichen horizontal in Bezug auf den jeweiligen Arm (10) bewegen können, und derart, dass die beiden Zwischenräume (E) ständig gleich sind.

9. Landwirtschaftliche Maschine nach Anspruch 1, **dadurch gekennzeichnet, dass**, damit die Maschine (1) von der Arbeitsstellung in eine Transportstellung der Werkzeuggruppen (9) umgesetzt werden kann, der Rahmen (3, 13) eine Kippvorrichtung (13) aufweist, die den beiden Seiteneinheiten (4) gemeinsam ist und mit dem Chassis (3) um eine quer zur Längsrichtung (D1) verlaufende Kippachse (14) gelenkig verbunden ist.

## Claims

1. Agricultural machine (1) intended to be hitched to a tractor (2) and comprising two side units (4) and a frame (3, 13), which extends in a longitudinal direction (D1), each side unit (4) comprising an arm (10) mounted such that it pivots in relation to the frame (3, 13) around a respective folding axis (12) oriented substantially parallel to the longitudinal direction (D1), each side unit (4) comprising a tool unit (9) connected to the frame (3, 13) by means of the respective arm (10) and being able to occupy a work position in which it rests on the ground (S), each side unit (4) comprising a connection means (26), which is configured to allow the respective tool unit (9) to move in relation to the respective arm (10) and which comprises a lightening actuator (30) that exerts an upward directed force on each tool unit (9) in work position, the machine (1) comprising a tie-rod (35) connected to each of the arms (10) by a respective upper joint (46) allowing at least one pivoting around an upper axis (46a) parallel to the respective folding axis (12), **characterized in that** the tie-rod (35), the frame (3, 13) and the arms (10) each form one side of a distribution four bar linkage (47) projected on a plane transverse to the longitudinal direction (D1).

2. Agricultural machine according to claim 1, **characterized in that**, when the tool units (9) are in work position and the machine (1) is on a flat ground (S), the lightening actuators (30) are arranged in such a way as to exert the same force on their respective tool unit (9).

3. Agricultural machine according to one of claims 1 to 2, **characterized in that** the distribution four bar linkage (47) is a parallelogram.

4. Agricultural machine according to one of claims 1 to 3, **characterized in that** an arrangement (51) of one arm (1) or of the arms (10) and/or or of the tie-rod (35) is provided, which makes it possible for the opening angle (alpha) formed by the longitudinal dimensions (D2) of the arms (10) to have a value lower than the value it has in nominal work position of the tool units (9).

5. Agricultural machine according to one of claims 1 to 4, **characterized in that** the tie-rod (35) is carried out by a rigid rod.

6. Agricultural machine according to one of claims 1 to 5, **characterized in that** each arm (10) is combined with a headland actuator (40) articulated on one hand to the frame (3, 13) and on the other hand to the said arm (10), and **in that** at least in work position of the tool units (9), the headland actuators (40) are connected to one another.

7. Agricultural machine according to one of claims 1 to 6, **characterized in that** the headland actuators (40) can be actuated separately so that one tool unit (9) is in headland position while the other tool unit (9) is in work position.

8. Agricultural machine according to one of claims 1 to 7, **characterized in that** the spacing (E) is defined as being the distance between each tool unit (9) and the median plane (M), and **in that** in work position of the tool units (9), the connection means (26) is configured to allow the tool units (9) to move substantially horizontally relative to the respective arm (10), and so that the two spacings (E) are constantly equal.

9. Agricultural machine according to claim 1, **characterized in that** in order to transpose the machine (1) between the work position and a transport position of the tool units (9), the frame (3, 13) comprises a tilter (13) common to the two side units (4) and articulated to the chassis (3) around a tilting axis (14) transverse to the longitudinal direction (D1).
